# EUROPEAN PATENT SPECIFICATION

(11) **EP 1 427 779 B1**
(45) Date of publication and mention of the grant of the patent: **22.02.2012**
(21) Application number: 02759973.7
(22) Date of filing: 04.09.2002
(51) Int. Cl.: C08L 15/00, C08L 77/00

(54) **HEAT AND OIL RESISTANT POLYMER BLENDS OF POLYAMIDES AND HYDROGENATED CARBOXYLATED NITRILE RUBBER**
HITZE UND ÖLBESTÄNDIGE POLYMERLEGIERUNGEN AUS POLYAMIDEN UND HYDRIERTEN CARBOXYLIERTEN NITRILKAUTSCHUK
MELANGES POLYMERES RESISTANT A LA CHALEUR ET A L'HUILE, FAITS A PARTIR DE POLYAMIDES ET DE CAOUTCHOUC DE NITRILE CARBOXYLE HYDROGENE

(30) Priority: 05.09.2001 CA 2356580
(43) Date of publication of application: 16.06.2004
(73) Proprietor: Lanxess Inc., Sarnia, Ontario N7T 7M2 (CA)
(72) Inventor: FERRARI, Lorenzo, Bright's Grove, Ontario NON 1CO (CA); GAMLIN, Janet, N., Sewickley, PA 15143 (US)
(74) Representative: Wichmann, Birgid
(86) International application number: PCT/CA2002/001355
(87) International publication number: WO 2003/020820

(56) References cited:
- EP-A- 0 364 859
- EP-A- 0 559 278
- ANIL K BHOWMICK ET AL: "STRUCTURE DEVELOPMENT DURING DYNAMIC VULCANICATION OF HYDROGENATED NITRILE RUBBER/NYLON BLENDS" JOURNAL OF APPLIED POLYMER SCIENCE, JOHN WILEY AND SONS INC. NEW YORK, US, vol. 49, no. 11, 15 September 1993 (1993-09-15), pages 1893-1900, XP000462224 ISSN: 0021-8995
- PIGLOWSKI J ET AL: "Oxazoline-functionalized hydrogenated nitrile rubber as impact modifier for polyamide-6" POLYMER, ELSEVIER SCIENCE PUBLISHERS B.V, GB, vol. 41, no. 10, May 2000 (2000-05), pages 3671-3681, XP004188982 ISSN: 0032-3861
- JONES M S ET AL: "CARBOXYLIERTER, HYDRIERTER NITRILKAUTSCHUK: EIN NEUARTIGES ELASTOMER MIT UEBERLEGENEN GEBRAUCHSEIGENSCHAFTEN CARBOXYLATED HYDROGENATED NITRILE RUBBER" GUMMI, FASERN, KUNSTSTOFFE. INTERNATIONALE FACHZEITSCHRIFT FUR DIE POLYMER-VERARBEITUNG, GENTNER VERLAG. STUTTGART, DE, vol. 48, no. 6, 1995, pages 405-412, XP001119565 ISSN: 0176-1625

## Description

The present invention relates to blends of thermoplastic elastomers. A conjugate is formed by blending a polyamide with a hydrogenated carboxylated nitrile rubber at elevated temperature. The conjugate is readily formable by moulding or extrusion, and it displays excellent heat, oil-resistant and barrier properties that render it suitable for use, for example, in many automotive under-the-hood applications.

Thermoplastic elastomers find many applications, for example in coatings, adhesives and in moulded and extruded parts. The latter are valued for their toughness and impact resistance, and find application in automotive parts, mechanical parts, electrical parts and other uses.

Improvements in properties are being constantly sought, however, and often for this purpose polymeric materials are mixed or blended. The present invention is directed particularly to heat-and oil-resistant materials with good barrier properties, and to processes for their manufacture.

EP-A1-0 364 859 relates to vulcanizable rubbery compositions comprising a polyamide, a partially hydrogenated nitrile rubber and curatives in the nitrile rubber. Partially hydrogenated nitrile rubber, admixed with a curing agent, was gradually added to molten polyamide, with mixing. It is stated that it is preferred to use a polyamide having a low melting point, such as nylon 12. In a preferred embodiment the composition includes maleic anhydride or succinic anhydride. The specification says that it is believed that the anhydride additive improves mixing between the nylon and the rubber compound. Better results are obtained in an example in which maleic anhydride is used, but the properties of the product obtained are not particularly good, and are not adequate for commercial use.

US 4,508,867 relates to vulcanizable rubbery compositions comprising a crystalline polyamide, a synthetic rubbery polymer composed of acrylonitrile or methacrylonitrile, an alpha,beta-unsaturated carboxylic acid and butadiene, an additive selected from the halides of lithium, magnesium, calcium and zinc, an additive selected from the oxides and hydroxides of magnesium, calcium, barium and zinc and the peroxides of calcium and zinc and further comprising sulphur vulcanization active agents. Nylon 11 is the only polyamide whose use is exemplified.

The descriptive portion of the specification suggests that the mixing of the polyamide and the synthetic rubbery polymer should take place at a temperature in the range of from about 50° to about 125°C. In Examples 1 and 2 mixing of nylon 11 and carboxylated nitrile rubber, and other ingredients, took place at 50°C. In Example 3 mixing took place at 190 to 199°C and Example 4 does not specify the temperature of mixing.

It is believed that the compositions of US 4,508,867 do not display adequate heat resistant properties.

In one aspect the invention provides a process which comprises blending a polyamide with a hydrogenated carboxylated nitrile rubber at a temperature above 20 deg. C to form a congugate.

The conjugates display some properties that are enhanced, as compared with corresponding properties of the polyamide, and some properties that are enhanced, as compared with corresponding properties of the hydrogenated carboxylated nitrile rubber. In particular, the conjugates display good heat-and oil-resistant properties and excellent barrier properties. These properties render the conjugates of the invention useful, for example, for containing volatile fuels such as gasoline in fuel hoses, fuel tanks, shields, fuel line and delivery hoses, inner lines for tires and industrial bladders and the like. Another advantage of the conjugates of the invention is that they are recyclable. Any excess or scrap conjugate material can be melted for re-moulding or re-extruding, for example, with no significant deterioration in properties. In this important characteristic it differs from most elastomers, which are not recyclable. Furthermore, the conjugates of the invention have a lower specific gravity than 100% hydrogenated carboxylated nitrile rubber. Hence less of the conjugate, by weight is needed to make a particular part, resulting in a material cost-saving.

Polyamides especially useful in the present invention are homopolymers and copolymers that have repeated amide linkages along a polymer chain. The polyamides are preferably of high molecular weight and are crystalline or glossy polymers. Examples include polycaprolactam (nylon 6), polylaurolactam (nylon 12), polyhexamethyleneadipamide (nylon 6,6), polyhexamethyleneazelamide (nylon 6,9), polyhexamethylenesebacamide (nylon 6,10), polyhexamethyleneisophthalamide (nylon 6,IP), polyaminoundecanoic acid (nylon 11), polytetramethyleneadipamide (nylon 4,6) and copolymers of caprolactam, hexamethylenediamine and adipic acid (nylon 6,66), and also aramids such as polyparaphenyleneterephthalamide. The majority of the polyamides have softening points and melting points in the range of from 160° to 250°C.

Hydrogenated carboxylated nitrile rubbers (HXNBR) and processes for making them are not known in the art and are the subject of our co-pending Canadian Patent Application 2,304,501 the disclosure of which is incorporated by reference for the purpose of Jurisdictions allowing for this feature. Such rubbers are formed by copolymerizing at least diene monomer, preferably a conjugated diene, at least one nitrile monomer, at least one unsaturated acid monomer and optionally further copolymerizable monomers, to form a copolymer with a random, or statistical, distribution of repeating units derived from the diene, nitrile, acid and optionally further co-monomers, followed by hydrogenation. When the, preferably conjugated, diene is polymerized the product contains some carbon-carbon double bonds. In the past attempts to hydrogenate those carbon-carbon double bonds have led also to reduction of nitrile and carboxyl groups, which is undesireable. The invention of CA-Application 2,304,501 enables hydrogenation of carbon-carbon double bonds of carboxylated nitrile rubber without concomitant reduction of nitrile and carboxyl groups, yielding novel and valuable polymers. These are nowadays commercially available from Bayer under the trademark Therban XT.

Many, preferably conjugated, dienes can be used in the hydrogenated carboxylated nitrile rubber. Mention is made of 1,3-butadiene, isoprene, 2,3-dimethyl-1,3-butadiene, 1,3-pentadiene and piperylene, of which 1,3-butadiene is preferred.

The nitrile monomer is normally acrylonitrile, methacrylonitrile or a-chloroacrylonitrile, of which acrylonitrile is preferred.

The unsaturated acid is preferably alpha"beta-unsaturated, and can be, for example, acrylic, methacrylic, ethacrylic, crotonic, maleic (possibly in the form of its anhydride), fumaric or itaconic acid, of which acrylic and methacrylic are preferred.

The conjugated diene usually constitutes in the range of from 50 to 85% of the polymer, the nitrile usually constitutes in the range of from 15 to 50% of the polymer and the acid in the range of from 0.1 to 10%, preferably 0.5 to 7%, these percentages being by weight. The polymer may also contain an amount, usually not exceeding 10wt.%, of another copolymerizable monomer, for example, an ester of an unsaturated acid, say ethyl, propyl or butyl acrylate or methacrylate, or a vinyl compound, for example, styrene, α-methylstyrene or a corresponding compound bearing an alkyl substitutent on the phenyl ring, for instance, a p-alkylstyrene such as p-methylstyrene. It is trivial that the values of the repeating units given above will have to be adjusted accordingly to result in a total of 100 wt.%. The polymer preferably is a solid that has a molecular weight in excess of 60,000, most preferably in excess of 100,000 g/mol.

The degree of hydrogenation can be expressed in terms of residual double bonds (RDB), being the number of carbon-carbon double bonds remaining after hydrogenation, expressed as a percentage of the carbon-carbon double bonds prior to hydrogenation. HXNBR's with RDB less than 6 are preferred and HXNBR's with RDB in the range from 0.9 to 5.5 are particularly preferred. Preferred acrylonitrile contents are 32%, 33%, 34%, 36%, 39% and 43% (all by weight).

In a preferred embodiment of the process, the polyamide is melted and HXNBR is then added to the melt, with stirring in an intensive mixer such as a Banbury or in a high-shear extruder. The mixing is preferably in a single step and is without curatives. The mixing temperature can range from 150°C to 300°C, preferably from 170°C to 270°C, and most preferably from 200 to 250°C, depending upon the polyamide grade. The fill factor, i.e., the volume of material being mixed, expressed as a percentage of the volume of the mixing vessel, is preferably in the range from 50% to 95% preferably 65 to 80%, more preferably 55 to 75% with higher fill factors resulting in blends with better physical properties. The mixer is preferably used at, or close to its maximum RPM (95 rpm) to ensure good dispersion of the elastomer within the polyamide matrix.

Nylon 6, for example, melts at a relatively high temperature in the range of 225°C, and the molten nylon 6 may be at a temperature of in the range of 240°C. If held at this temperature for any length of time HXNBR may degrade, so it is preferred to minimise the time at this temperature. An antioxidant may also be included in the mixture, suitably in an amount up to 1.5 phr, preferably 0.7 phr. The mixture is stirred and if the torque required to drive the stirrer is plotted against time it is found that the torque increases with time. This indicates bonding or crosslinking between the polyamide and the hydrogenated carboxylated nitrile rubber. When the torque ceases to increase this indicates that crosslinking has substantially ceased, and also that mixing is complete.

As indicated, an antioxidant may be used in the mixing process. Examples of suitable antioxidants include p-dicumyl diphenylamine (Naugard® 445), Vulkanox® DDA (a diphenylamine derivative), Vulkanox® ZMB2 (zinc salt of methylmercapto benzimidazole), Vulkanox® HS (polymerized 1,2-dihydro-2,2,4-trimethyl quinoline) and Irganox® 1035 (thiodiethylene bis(3,5-di-tert.-butyl-4-hydroxy) hydrocinnamate or thiodiethylene bis(3-(3,5-di-tert.-butyl-4-hydroxyphenyl)propionate supplied by Ciba-Geigy. Vulkanox is a trademark of Bayer AG.

The ratio of polyamide to hydrogenated carboxylated nitrile rubber can vary between wide limits, preferably from 90 parts to 10 parts by weight to 10 parts to 90 parts by weight. Properties of the conjugate vary, depending on the ratio of polyamide to elastomer. A conjugate of 30 parts polyamide and 70 parts elastomer was flexible and was suitable for use in flexible hoses for use, for example, as fuel lines. A 50:50 conjugate was hard and a 70:30 conjugate was like a plastic, and acceptable for rigid fuel lines but not flexible ones. The ratio can of course be varied to optimise particular properties, and tests of conjugates of different proportion can be carried out routinely by persons skilled in the art. '

It is possible to include processing oils and extenders or plasticizers in the conjugate. Suitable plasticizers include those well known for use with nitrile polymers such as the phthalate compounds, the phosphate compounds, the adipate compounds, the alkyl carbitol formal compounds, the coumarone-indene resins and the like. An example is the plasticizer commercially available under the trademark Plasthall 810, or Plasthall TOTM (trioctyl trimellitate) or TP-95 (di-(butoxy-ethoxy-ethyl) adipate supplied by Morton Intenational. The plasticizer should be a material that is stable at high temperature and will not exude from the conjugate. If plasticizer is to be used it is preferred to melt the polyamide, add a first portion of the hydrogenated carboxylated nitrile rubber, say about half, mix, then add the plasticizer, mix and then add the remainder of the HNBR and continue mixing. The amount of plasticizer used will depend upon the proposed end use of the conjugate, but may be between 1 and 40 phr, preferably between 5 and 20 phr. It is further possible to use a blend of polyamides. It is also possible to use a mixture of HXNBR's or a mixture of the HXNBR and another elastomer, for example a carboxylated nitrile rubber (XNBR), a hydrogenated nitrile rubber (HNBR) or a nitrile rubber (NBR), a vinyl acetate rubber (EVM) or a ethylene/acrylate rubber (AEM). Suitable XNBR's are commercially available from Bayer under the trademark Krynac and suitable HNBR's are commercially available from Bayer under the trademark Therban and suitable NBR's are available from Bayer under the trademark Perbunan. EVM is commercially available from Bayer under the trademark Levapren. Vamac® D an ethylene acrylic elastomer is commercially available from (DuPont. If the HNBR is used in admixture with another elastomer it is preferred that the HXNBR shall be at least 25%, preferably at least 50%, of the HXNBR-elastomer mixture.

It is possible to incorporate other known additives or compounding agents in the conjugate. These are preferably added after the blending of the polyamide and HXNBR. Additives include reinforcing fillers, for example carbon black, white fillers, calcium carbonate, clay, nanoclay (such as Cloisite 15A supplied by Southern Clay Products), silica or talc, calcium carbonate, antioxidants, antiozonants, processing oils, ultra violet absorbers, heat stabilisers, co-agents and the like.

The conjugate of the invention sets, of course, to form a solid on cooling. The conjugate can be remelted and resolidified without any significant deterioration or deleterious effect on its properties. In this respect, it differs from elastomers such as pure HXNBR, XNBR, HNBR and the like; after crosslinking these cannot be melted and resolidified. This property of the conjugate of the invention is important. It permits the conjugate of the invention to be made into the form of pellets, which pellets can be remelted to be formed into final products by, for example, moulding or extrusion. It is also possible to recycle conjugate of the invention, which is a very significant commercial advantage of the invention.

The invention is further illustrated in the following examples.

### EXAMPLES

### General Procedure

A Brabender Plasticorder was fitted with roller mixing blades and a 369g capacity bowl. Mixer bowl temperature, fill factor, mixing time and roller speed were varied. In a typical mixing procedure polyamide was initially melted (at 20 °C higher than the polyamide melting point, followed by addition of elastomer and, in some instances, fillers and processing oils, and a cure system. The polymer blend was then passed through a 70 °C mill once to make a flat sheet.

A Preco Press was used to compression mould test pieces. The compound was added to a pre-heated mould and placed in the press at 0 psi at 240°C for 10 minutes. The mould was then held at 20,000 psi for 20 minutes, after which the moulded sample was transferred to a cold press and held at 10,000 psi for 5 min.

The polyamide used was Durethan® B31SK polyamide 6, supplied by Bayer AG. B31SK is an unreinforced polyamide with low crystallinity. It has the following desirable properties:
high strength, stiffness and abrasion resistance
good chemical and stress-cracking resistance
vicat softening point > 200°C; melting point - 225°C
good barrier properties

Additional polyamides used in the invention and supplied by Bayer included Durethan® B 30 S (melting point 225 °C), Durethan® CI 31 F (mp 190 °C) and Durethan® C 38 F (mp 210 °C).

As HXNBR there was used a Therban® XT that has carboxyl moieties, based on acrylic acid, of approximately 5.0%, an acrylonitrile content of 33%, the balance 1,3-butadiene, a Mooney viscosity of 77 and an RDB of 3.5%. As HNBR's there were used Therban® A3406 and Therban® C3446, Therban® A3406 has an acrylonitrile content of 34% and an RDB % not greater than 0.9, Therban® C3446 has an acrylonitrile content of 34% and an RDB of 4 %.

### Example 1 (Comparative)

70 Parts (phr - per hundred rubber) of HNBR (Therban® A3406 or Therban® C3446) and 30 parts of polyamide 6 (Durethan® B 31SK) were blended in the presence of 0.7 phr of antioxidant Naugard® 445, a peroxide cure system, namely 5.3 phr of Vulcup 40KE and 1.1 phr of TAIC and 0.5 phr of antioxidant Irganox 1035 (thiodiethylene bis(3,5-di-t-butyl-4-hydroxy) hydrocinnamate or thiodiethylene bis(3-(3,5-di-t-butyl-4-hydroxyphenyl)propionate supplied by Ciba-Geigy.. The Brabender mixing conditions were as follows:
55% fill factor;
80 RPM mixing blade speed;
230°C bowl temperature;
12 min total mixing time.

Results are given in Table 1.

**Table 1 Roomtemperature physical properties for 70:30 phr Therban®:Polyamide 6 blends (Peroidde/Coagent)**

| **Therban® grade** | **Tensile Strength (MPa)*** | **Ultimate Elongation (%)**** | **Tensile set(%)***** | **Hardness (Sh. A)****** |
|---|---|---|---|---|
| **A3406** | **2.24** | **489** | **>100** | **60** |
| **C3446** | **1.95** | **337** | **na** | **64** |

| | | | | |
|---|---|---|---|---|
| * ASTM **D 412** **ASTM **D 412** ***ASTM D 412-98 ****ASTM D-2240 | | | | |

### Example 2

HXNBR (Therban® XT, 70 parts) and polyamide 6 (Durethan® B31SK, 30 parts), with no curatives, were blended. The polyamide was melted and the HXNBR and 0.7 phr of an antioxidant (Naugard® 445) were then added. It was observed that mixing torque would increase for a period of about three minutes and then reach an equilibrium level, at which time mixing was stopped. Results are given in Table 2.

**Table 2 Room temperature physical properties for 70:30 phr Therban® XT:Polyamide 6 blends with no curatives; mixing conditions were varied**

| **Run** | **Tensile Strength (MPa)** | **Ultimate Elongation (%)** | **Tensile set (%)** | **Hardness (Sh. A)** |
|---|---|---|---|---|
| **A** | **9.5** | **165** | **N/A** | **78** |
| **B** | **8.5** | **350** | **35** | **62** |
| **C** | **7.1** | **216** | **16** | **67** |

The product of these runs show a tensile strength greater than 7 MPa, ultimate elongation greater than 100% and tensile set less than 50%. The best results were achieved in run B, in which mixing was done with a high fill factor (70%), fast RPM (95) and high temperature (240°C).

When runs similar to runs A, B and C were carried out but using an HNBR in place of the HNBR, no increase in mixing torque was observed in the absence of a curing system, suggesting that there was no interaction between the HNBR and the polyamide. This contrasts with the situation when HNBR and polyamide are blended.

The products of runs A, B and C were heat aged in an air-oven at 150°C for 168 hours or for 504 hours, and properties measured. For comparison peroxide-cured Therban® A3406 was heat aged and its properties measured. Results are given in Table 3.

**Table 3 Heat-aged physical properties for 70:30 phr Therban® XT:Polyamide 6 blends with no curatives; aging temperature was 150°C**

| **Run** | **Aging Time (h)** | **Change in Tensile Strength (%)** | **Ultimate Elongation (%)** | **Hardness (Sh. A)** |
|---|---|---|---|---|
| **A** | **504** | **6** | **-44** | **-9** |
| **B** | **168** | **84** | **-44** | **-7** |
| **C** | **168** | **82** | **-30** | **-9** |

### Heat-aged physical properties for 100 phr Therban® peroxide-cured optimized for heat resistance; aging temperature was 150°C

| | | | | |
|---|---|---|---|---|
| **A3406** | **168** | **5** | **-34** | **9** |
| **A3406** | **504** | **-34** | **-83** | **20** |

These results show that the long term heat aging performance of the products of runs A, B and C exceed that of Therban® A3406, with good retention of physical properties such as tensile strength and ultimate elongation at high temperature. The brittle point for the product of run B exceeded -72°C.

In contrast, the product of blending regular HNBR (Therban® A3406) with polyamide in the absence of a curing system melted when attempt was made to heat-age it at 150°C.

The permeability of the product of run C was measured and found to be 3.5 (cm²/(atm·s))x10⁸, which compares favourably with the permeability of 3 of a typical bromobutyl cured tire innerliner.

The products of runs A, B and C were all reprocessable. Moulded test pieces were cut and remoulded several times without any evidence of gel material. The products had excellent flow properties at moulding temperatures, for example 240°C.

### Example 3 (comparative)

In this example HXNBR (Therban® XT, 70 parts) and polyamide 6 (Durethan® B31SK, 30 parts) and 0.7 phr antioxidant (Naugard® 445) were blended in the presence of a 2.2 to 5.3 phr of peroxide curing agent Vulcup® 40KE (2, 2'-bis(tert.-butylperoxy)diisopropylbenzene), and 1.1 or 2.2 phr of trial lylisocyanurate coagent (DIAK 7, available from DuPont). Mixing conditions were kept constant at 95 RPM, 240°C and 65% fill factor (Table 4).

Results are given in Table 4.

**Table 4 Room temperature physical properties for 70:30 phr Tberban®:Polyamide 6 blends with peroxide cure system**

| **Run** | **Vulcup® (phr)** | **DIAK® 7 (phr)** | **Tensile Strength (MPa)** | **Ultimate Elongation (%)** | **Tear Strength (kN/m)** | **Hardness (Sh. A)** |
|---|---|---|---|---|---|---|
| **D** | **2.2** | **1.1** | **7.6** | **266** | **24** | **59** |
| **E** | **2.2** | **2.2** | **9.0** | **332** | **28** | **60** |
| **F** | **3.3** | **2.2** | **7.8** | **344** | **21** | **61** |
| **G** | **5.3** | **1.1** | **7.1** | **274** | **28** | **68** |

### Example 4 (comparative)

HXNBR (Therban® XT, 70 parts) and polyamide 6 (Durethan® B31SK, 30 parts) and 0.7 phr antioxidant (Naugard® 445) were blended with 0.05 to 0.3 phr of bifunctional curing agent, namely hexamethylenediamine, DIAK 1.

Results are given in Table 5. Run I is comparative, as there is used an HNBR, not an HXNBR.

**Table 5 Room temperature physical properties for 70:30 phr Therban®:Polyamide 6 blends with DIAL 1 cure system; various mixing conditions***

| **Run** | **Therban ® Grade** | **DIAK 1 (phr)** | **Tensile Strength (MPa)** | **Ultimate Elongation (%)** | **Tear Strength (kN/m)** | **Hardness (Sh. A)** | **Tensile Set (%)** |
|---|---|---|---|---|---|---|---|
| **H^{a}** | **XT** | **.2** | **8.3** | **109** | **58.3** | **76** | **15** |
| **I^{B}** | **A3406** | **.2** | **4.6** | **45** | **33.6** | **77** | **6.7** |
| **J^{b}** | **XT** | **.2** | **7.8** | **140** | **42.0** | **74** | **12** |
| **K^{b}** | **XT** | **.3** | **7.8** | **104** | **64.4** | **76** | **10** |
| **L^{a}** | **XT** | **.1** | **8.5** | **242** | **ND** | **76** | **-ND** |
| **M^{a}** | **XT** | **.05** | **8.1** | **205** | **-ND** | **75** | **19** |
| **N^{c}** | **XT** | **.08** | **9.5** | **288** | **-ND** | **71** | **27** |

### Mixing conditions:

a= 240°C, 95 RPM, 70% fill factor; DIAK 1 added after 8 min mix time. Total mix time was 9 minutes.
b= 230°C, 95 RPM, 67% fill factor; DIAK 1 added after 8 min mix time. Total mix time was 9 minutes.
c= 240°C, 95 RPM, 70% fill factor; DIAK 1 added once polymer blend torque was minimized (approx 5 minutes into mix). Total mix time was 8 minutes.
ND not determined

### Example 5 (runs O P and N are comparative examples)

HXNBR (Therban® XT, 70 parts) and polyamide 6 (Durethan® B31SK, 30 parts) and 0.7 phr antioxidant (Naugard® 445) were blended. In runs O and P there were used 2.2 phr Vulcup® 40KE and 2.2 phr DIAK® 7, added after 7 minutes of mixing.

An amount of 0.15 phr antioxidant Irganox 1035 was added at the end of the reaction. The mixing conditions in runs O P and Q were: temperature 240°C; speed 95 RPM; fill factor 70%; total mixing time 8 minutes. Compound N contained 0.08 phr of Diak 1 as the curative, which was added after 7 minutes. The oil resistance of the formed conjugates in ASTM Oil 1 and IRM 903 was then measured. ASTM Oil 1 is a blend of aromatics. IRM 903 is a blend of naphthenics and paraffinics. The blends were heat-aged at 150°C for 168 hours in ASTM Oil 1 and IRM 903 and the results are given in Table 6 and 7, respectively.

**Table 6 Heat aging results for selected Therban® XT/polyamide 6 blends at 150°C for 168 hours in ASTM Oil 1.**

| **Compound Number** | **Cure System** | **Tensile Strength (% change)** | **Ultimate Elongation (% change)** | **Hardness (Sh. A change)** | **Weight Change (%)** | **Volume Change (%)** |
|---|---|---|---|---|---|---|
| **O** | **Peroxide** | **38** | **-1** | **-2** | **-0.7** | **0.3** |
| **P** | **Peroxide** | **41** | **2** | **1** | **-1.4** | **-1.4** |
| **Q** | **None** | **118** | **40** | **8** | **0.4** | **1.6** |
| **N** | **DIAK 1** | **77** | **-17** | **5** | **0.4** | **1.3** |
| **HNBR Control** | **Peroxide** | **18** | **-33** | **1** | **-2.1** | **-2.4** |

The blends cured using Peroxide, O and P, exhibited the best overall performance i.e. retention of physical properties and had minimal weight and volume change after oil-immersion aging. The tensile strength of all the blends increased during aging whereas the elongation values varied depending on the cure system. The oil resistance of the blends is comparable to the HNBR control.

**Table 7 Heat aging results for selected Therban® XT/polyamide 6 blends at 150°C for 168 hours in IRM 903.**

| **Compound Number** | **Cure System** | **Tensile Strength (%)** | **Ultimate Elongation (%)** | **Hardness (Sh. A)** | **Weight Change (%)** | **Volume Change (%)** |
|---|---|---|---|---|---|---|
| **O** | **Peroxide** | **-36** | **-34** | **-10** | **15.6** | **18.1** |
| **P** | **Peroxide** | **-37** | **-ND** | **-5** | **14.7** | **15.9** |
| **Q** | **None** | **36** | **8** | **-5** | **17.9** | **20.3** |
| **N** | **DIAKI** | **-17** | **-39** | **-4** | **17.9** | **20.3** |
| **HNBR Control** | **Peroxide** | **-20** | **-24** | **-8** | **14.6** | **17.9** |

The IRM 903 oil resistance of the TPE blends is comparable to the Therban® A3406 peroxide cured reference formulation. All blends had a decrease in hardness and an increase in weight and volume after the testing.

### Example 6 (comparative)

The polyamide 6 (Durethan® C 38 F, 30 phr) was melted first (2 min) at 240 °C, followed by the addition of HNBR (Therban® XT, 70 phr) and 1.5 phr of Naugards 445. The curatives were added after 5 minutes at 2.2 phr of peroxide Vulcup® 40 KE , 2.2 phr of coagent TAIC or HVA 2 and 2.2 phr of zinc peroxide in compounds R to T. Diak 1 (0.05 phr) was added in R to T after 6 minutes. The total mixing time was 7 minutes. The resin (SP 1055) was added at a level of 7 phr after 7 minutes and reaction stopped after 9 minutes.

**Table 7 Room temperature physcial properties for 70:30 phr Therban®: Polyamide 6 blends with and without zinc peroxide in the presence of peroxide cure systems or phenolic resin**

| **Compound Number** | **Curatives** | **Tensile Strength (MPa)*** | **Ultimate Elongation (%)**** | **Hardness (Sh.A)***** |
|---|---|---|---|---|
| R | Peroxide TAIC Diak 1 | 5.98 | 368 | 60 |
| S | Peroxide TAIC Diak 1 ZP 1014 | 9.96 | 321 | 69 |
| T | Peroxide HVA 2 Diak 1 ZP 1014 | 9.25 | 289 | 71 |
| U | Resin SP 1055 | 8.69 | 384 | 63 |

### Example 7 (comparative)

The polyamide 6 (Durethan® C 38 F, 30 phr) was melted first (2 min) at 240 °C, followed by the addition of HNBR (Therban® XT, 70 phr) or Therban® XT (35 phr) with Therban® A3406 (35 phr) or Therban® XT (50 phr) with Levapren® 700 HV (20 phr) and 0.7 phr of Naugard® 445. The curatives were added after 5 minutes at 2.2 phr each of peroxide Vulcup® 40 KE , coagent TAIC or HVA 2 and zinc peroxide in compounds V to X. Diak 1 (0.05 phr) was added in compound V to X after 6 minutes. The total mixing time was 7 minutes. Compounds V and X also contain 0.5 phr of processing aid Armeen D.

**Table 8 Room temperature physcial properties for 70:30 phr Therban® XT /Therban® or /Levapren® with Polyamide 6 blends peroxide cured**

| **Compound Number** | **Therban®** | **Tensile Strength (MPa)*** | **Ultimate Elongation (%)**** | **Hardness (Sh.A)***** |
|---|---|---|---|---|
| V | XT (70 phr) | 12.23 | 329 | 72 |
| W | XT/A3406 (35/35) | 10.45 | 278 | 67 |
| X | XT/Levapren 700 HV (50/20) | 12.25 | 301 | 71 |

### Example 8 (comparative)

A mix was made by adding Therban® XT (70 phr), antioxidant Naugaurd 445 (1.5 phr), Stearic Acid (1 phr) and either fillers Vulkasil A1 (10 phr) with Silane A 172 DLC (72%) (0.5 phr) or Carbon Black N660 (10 phr) to a 6 X 12 inch mill at 30 °C at 55 rpm for 11 minutes. Curatives at 2.2 phr each of peroxide Vulcup® 40 KE , coagent TAIC or HVA 2 and zinc peroxide and 0.05 phr of Diak 1 were added at the second stage and milled for 3 minutes at the same temperature. The polyamide 6 (Durethan® C 38 F, 30 phr) was melted in the Brabender (2 min) at 240 °C, followed by the addition of the mix. The reaction was completed after 7 minutes.

**Table 9 Room temperature physcial properties for 70:30 phr Therban® XT with Polyamide 6 blends peroxide cured with fillers**

| Compound Number | Filler | Tensile Strength (MPa)* | Ultimate Elongation (%)** | Hardness (Sh.A)*** |
|---|---|---|---|---|
| Z | None | 22.43 | 425 | 87 |
| AA | White Filler | 19.92 | 318 | 88 |
| AB | Black Filler | 15.59 | 294 | 87 |

## Claims

1. A process which comprises blending a polyamide with a hydrogenated carboxylated nitrile rubber at a temperature above 20 deg.C to form a conjugate, wherein the polyamide is melted and the hydrogenated carboxylated nitrile rubber is added to the molten polyamide, with stirring and in the absence of any curative system.

2. A process according to claim 1 wherein the polyamide is polyamide 6.

3. A process according to claim 1 or 2 wherein the hydrogenated carboxylated nitrile rubber is a copolymer of acrylonitrile, butadiene and acrylic acid, which has a residual carbon-carbon double bond content of 6% or less.

4. A process according to claim 1, 2 or 3 wherein the temperature is in the range of from 150 to 300°C.

5. A process according to any one of claims 1 to 4 wherein the blending is carried out in a means for mixing with a fill factor in the range 50 to 95%.

6. A process according to any one of claims 1 to 5 which comprises the step of forming the conjugate into pellets suitable for use in moulding or extrusion operations.

## Patentansprüche

1. Verfahren, bei dem man ein Polyamid bei einer Temperatur über 20°C mit einem hydrierten carboxylierten Nitrilkautschuk zu einem Konjugat mischt, wobei das Polyamid geschmolzen und der hydrierte carboxylierte Nitrilkautschuk unter Rühren und in Abwesenheit jeglichen Härtungssystems zu dem schmelzflüssigen Polyamid gegeben wird.

2. Verfahren nach Anspruch 1, bei dem es sich bei dem Polyamid um Polyamid-6 handelt.

3. Verfahren nach Anspruch 1 oder 2, bei dem es sich bei dem hydrierten carboxylierten Nitrilkautschuk um ein Copolymer von Acrylnitril, Butadien und Acrylsäure mit einem Restgehalt an Kohlenstoff-Kohlenstoff-Doppelbindungen von 6% oder weniger handelt.

4. Verfahren nach Anspruch 1, 2 oder 3, bei dem die Temperatur im Bereich von 150 bis 300°C liegt.

5. Verfahren nach einem der Ansprüche 1 bis 4, bei dem man das Mischen in einer Mischeinrichtung mit einem Füllfaktor im Bereich von 50 bis 95% durchführt.

6. Verfahren nach einem der Ansprüche 1 bis 5, bei dem man das Konjugat zu Pellets formt, die zur Verwendung bei Abform- oder Extrusionsvorgängen geeignet sind.

## Revendications

1. Procédé qui comprend le mélange d'un polyamide avec un caoutchouc nitrile carboxylé hydrogéné à une température supérieure à 20 °C pour former un conjugué, dans lequel le polyamide est fondu et le caoutchouc nitrile carboxylé hydrogéné est ajouté au polyamide fondu, sous agitation et en l'absence de tout système durcisseur.

2. Procédé selon la revendication 1 dans lequel le polyamide est du polyamide 6.

3. Procédé selon la revendication 1 ou 2 dans lequel le caoutchouc nitrile carboxylé hydrogéné est un copolymère d'acrylonitrile, de butadiène et d'acide acrylique, qui possède une teneur résiduelle en doubles liaisons carbone-carbone d'au plus 6%.

4. Procédé selon la revendication 1, 2 ou 3 dans lequel la température est dans la fourchette de 150 à 300°C.

5. Procédé selon l'une quelconque des revendications 1 à 4 dans lequel le mélange est réalisé dans un dispositif permettant d'effectuer le mélanger avec un facteur de remplissage dans la fourchette de 50 à 95%.

6. Procédé selon l'une quelconque des revendications 1 à 5 qui comprend l'étape de formation de pellets du conjugué qui conviennent pour l'utilisation dans les opérations de moulage ou d'extrusion.
